(19) Europäisches Patentamt
European Patent Office
Office européen des brevets

(11) **EP 3 723 273 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(51) Int Cl.:
***H02P 21/18*** *(2016.01)*    ***H02P 21/13*** *(2006.01)*

(21) Anmeldenummer: **19168686.4**

(22) Anmeldetag: **11.04.2019**

(54) **VERFAHREN ZUR ERMITTLUNG DER ROTORLAGE**

METHOD FOR DETERMINING ROTOR POSITION

PROCÉDÉ DE DÉTERMINATION DE LA POSITION DU ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.10.2020 Patentblatt 2020/42**

(73) Patentinhaber: KEB Automation KG
**32683 Barntrup (DE)**

(72) Erfinder: **Schöke, Achim**
**32816 Schieder-Schwalenberg (DE)**

(74) Vertreter: **Brinkmann & Partner**
**Patentanwälte**
**Partnerschaft mbB**
**Am Seestern 8**
**40547 Düsseldorf (DE)**

(56) Entgegenhaltungen:
**DE-A1-102006 004 034**

- **ARENA P ET AL: "INDUCTION MOTOR MODELLING USING MULTI-LAYER PERCEPTRONS", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, Bd. 76A, Nr. 5, 1. Mai 1993 (1993-05-01), Seiten 761-771, XP000321988, ISSN: 0916-8508**
- **SHOUSE K R ET AL: "Observer-based control of permanent-magnet synchronous motors", POWER ELECTRONICS AND MOTION CONTROL. SAN DIEGO, NOV. 9 - 13, 1992; [PROCEEDINGS OF THE INTERNATIONAL CONFERENCE ON INDUSTRIAL ELECTRONICS, CONTROL, INSTRUMENTATION AND AUTOMATION (IECON)], NEW YORK, IEEE, US, Bd. CONF. 18, 9. November 1992 (1992-11-09), Seiten 1482-1487, XP010060538, DOI: 10.1109/IECON.1992.254382 ISBN: 978-0-7803-0582-3**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ermittlung der Rotorlage einer mit einem Frequenzumrichter betriebenen Drehfeldmaschine mit den Merkmalen von Anspruch 1.

Für eine hochdynamische Regelung elektrischer Antriebe werden in vielen Bereichen der industriellen Antriebstechnik frequenzumrichtergespeiste Drehstromantriebe eingesetzt. Das Grundprinzip dieser Antriebe ist, dass drehmomentbildende und flussbildende Größen getrennt voneinander geregelt werden können. Um dies zu erreichen, ist eine genaue Information über die Rotorlage zwingend erforderlich. Die feldorientierte Regelung ist hier als bekanntestes Verfahren zu nennen, bei der auf die Rotorlageinformation nicht verzichtet werden kann. Als Antriebstypen sind beispielsweise Synchron-, Synchronreluktanz- und Asynchronmaschinen zu nennen.

Eine Möglichkeit, die Information über die Rotorlage zu erhalten, besteht darin, die Maschine mit einem Lagegeber auszustatten. Diese Maßnahme führt allerdings dazu, dass die Kosten der Maschine steigen. Zusätzlich erhöht sich die Ausfallwahrscheinlichkeit, da beispielsweise aufgrund von Störeinflüssen das Gebersignal verfälscht werden kann. Im schlimmsten Fall kann das Gebersignal vollständig unbrauchbar sein, beispielsweise bei einem Kabelbruch.

Aus diesem Grund werden häufig die sogenannten "geberlosen" Verfahren eingesetzt. Bei diesen Verfahren wird der Motor als Sensor genutzt, um die Rotorlage aus den zur Verfügung stehenden elektrischen Signalen zu ermitteln. Geberlose Verfahren, die dabei lediglich auf einem Grundwellenmodell der Maschine beruhen, versagen bei Drehzahl Null. Bei kleinen Drehzahlen sind sie zudem ungenau und können zur Instabilität des Antriebs führen. Aus diesem Grund gibt es eine Vielzahl von alternativen Verfahren, bei denen eine Anisotropie des Motors ausgenutzt wird, um die Rotorlage des Motors bis einschließlich Drehzahl Null zu ermitteln.

Die Ursachen einer Anisotropie können hauptsächlich durch zwei physikalische Effekte erklärt werden. Zum einen bewirkt eine asymmetrische Läuferstruktur, dass die Permeabilität des Eisenmaterials räumlich unterschiedlich ausgeprägt ist. Das führt dazu, dass die Ständerinduktivität des Motors eine Rotorlageabhängigkeit besitzt. Zum anderen kann eine Anisotropie durch den Magnetisierungszustand des Motors entstehen. Diese Ausprägung ist dann durch die Sättigung des Eisenmaterials begründet und führt ebenfalls zu einer rotorlageabhängigen Ständerinduktivität.

Verfahren zur Ermittlung der Rotorlage unter Berücksichtigung anisotropischer Eigenschaften können in unterschiedliche Kategorien eingeteilt werden.

Es sind beispielsweise Verfahren bekannt, bei denen ein hochfrequentes Testsignal in den Motor eingeprägt wird. Dieses Testsignal kann dabei als alternierender oder rotierender Raumzeiger ausgeführt sein. Durch die Demodulation des hochfrequenten Signals kann die Rotorlage extrahiert werden. Ein solches Verfahren offenbart beispielsweise die gattungsbildende DE 10 2006 004 034 A1. So betrifft die DE 10 2006 004 034 A1 ein Verfahren zum feldorientierten Betrieb einer stromrichtergespeisten, geberlosen, permanenterregten Synchronmaschine. Dabei werden mittels eines einem Sollstrom-Raumzeiger überlagerten Testsignals ein geschätzter Polradlagewinkel und eine geschätzte Läuferkreisfrequenz fortlaufend korrigiert.

Die Verfahren dieser Kategorie haben den Nachteil, dass das Testsignal in der Regel kontinuierlich eingeprägt wird, was zu einer erheblichen Geräuschbelastung führen kann und die Verluste des Motors erhöht. Ein weiterer Nachteil ist die geringe Bandbreite der Regler, die auf die Rotorlageinformation angewiesen sind. Die geringe Bandbreite ergibt sich dadurch, dass die Bestimmung der Rotorlage durch die Demodulation eines hochfrequenten Signals mit einer Verzögerung behaftet ist.

Es sind auch Verfahren bekannt, die ohne Anspruch auf ein bestimmtes Anregungsmuster arbeiten. Beispielsweise kann die durch eine vorhandene Strom- und Drehzahlregelung vorhandene Anregung des Motors direkt genutzt werden. Daher ist unter bestimmten Voraussetzungen ein geberloser Betrieb auch ohne zusätzliche Einprägung von Testsignalen möglich.

Ein weiteres Unterscheidungsmerkmal geberloser Verfahren ist die Art der Motorstrommessung. Bei vielen Anwendungen wird lediglich der Mittelwert des Stromes über eine Schaltperiode benötigt. Da die Mittelwertbildung allerdings aufwändig und teuer ist, wird meistens eine zur Pulsweitenmodulation synchrone Stromabtastung verwendet. Unter der Annahme, dass der Strom sich innerhalb einer Schaltperiode linear ändert, kann so die Grundschwingung des Motorstromes erfasst werden. Dabei sind maximal zwei Messungen pro Schaltperiode möglich.

Für eine hochdynamische geberlose Regelung ist es allerdings vorteilhaft, mehr Informationen über den elektrischen Zustand innerhalb einer Schaltperiode zu erhalten. Dazu kann das Verfahren der Stromüberabtastung genutzt werden. Stromabtastungen mit bis zu 20MHz sind aus der industriellen Praxis bekannt.

Ein letztes Unterscheidungsmerkmal der verschiedenen geberlosen Verfahren ist das Bezugsystem, in dem die Rotorlageberechnung durchgeführt wird.

Hier besteht die Möglichkeit die Bestimmung der Rotorlage in Feldkoordinaten oder alternativ in Statorkoordinaten durchzuführen.

Die DE 102 26 974 A1 offenbart ein Verfahren zur Bestimmung einer Rotorlage einer feldorientiert betriebenen Drehfeldmaschine ohne einen mechanischen Sensor im Stillstand und bei kleiner Drehzahl. Dabei wird ein zur Pulsweitenmodulation synchroner feldorientierter Testraumzeiger einem geforderten Sollspannungs-Raumzeiger überlagert und es werden pro Schaltperiode wenigstens zwei Stromamplituden ermittelt. In Abhängigkeit dieser Stromamplitude wird ein testsignalbedingter Stromwechselanteil bestimmt, der anschließend in einen proportionalen Fehlerwinkel gewandelt wird, und es wird eine geschätzte Rotorlage derart nachgeführt, dass der Fehlerwinkel zu Null wird. Somit erhält man eine sensorlose Lageerkennung, die nachträglich in eine bestehende Servoregelung integriert werden kann, und wobei das Testsignal vollständig vom Stromregler entkoppelt ist.

Die DE 10 2016 220 891 A1 betrifft ein Regelsystem und ein Verfahren zum Betreiben einer Synchronmaschine. Insbesondere erfolgt eine Ansteuerung der Synchronmaschine dabei basierend auf einem Rotorwinkel, der mittels eines geberlosen Rotorwinkeldetektionsverfahrens ermittelt wurde. Um die Zuverlässigkeit des geberlos ermittelten Rotorwinkels zu überprüfen, wird der Differenzwert zwischen den Rotorinduktivitäten in q-Richtung und d-Richtung überwacht. Unterschreitet dieser Differenzwert einen Grenzwert, so weist dies auf mögliche Instabilitäten bei der Bestimmung des Rotorwinkels hin.

Aus der DE 10 2014 102 376 A1 ist ein Verfahren zum geberlosen Bestimmen der absoluten Winkelposition eines Rotors einer mehrphasigen Drehfeldmaschine bekannt. In einem ersten Verfahrensschritt wird ein Drehfeld mit einem mehrphasigen Testsignal erzeugt. Die durch das mehrphasige Testsignal bewirkten Phasenströme werden gemessen. In einem weiteren Schritt werden zwei auf ein zweiphasiges System bezogene Stromwerte $i_\alpha$ und $i_\beta$ aus den gemessenen Phasenströmen bestimmt. Aus diesen Stromwerten werden die zwei Produkte $i_\alpha \cdot i_\alpha \cdot i_\beta$ und $i_\beta \cdot i_\beta \cdot i_\alpha$ gebildet. Weiterhin wird ein Arkusfunktionswert für einen Quotienten aus den beiden gebildeten Produkten bestimmt.

Die aufgeführten Verfahren habe alle die Gemeinsamkeit, dass die sogenannte Raumzeigerdarstellung als Grundlage für eine Beschreibung benutzt wird. Diese Darstellungsform ermöglicht die Betrachtung eines Dreiphasensystems in einem einfacher zu behandelnden Zweiphasensystem. Die Raumzeigerdarstellung erhält man dabei durch die Anwendung der sogenannten Clarke-Transformation.

Nachteilig an diesen bekannten Verfahren ist, dass eine Auftrennung in die beiden Raumzeigerkomponenten durchzuführen ist, um Berechnungen zur Rotorlagebestimmung zu ermöglichen. Eine durchgängig geschlossene Lösung, d.h. eine Rotorlagebestimmung über sämtliche Drehzahlbereiche ist in der Raumzeigerdarstellung allerdings nicht möglich.

Zusammenfasend ergibt sich, dass zur Bestimmung der Rotorlage unterschiedliche Verfahren bekannt sind. Dabei ist allen Verfahren gemein, dass sie nur für einen bestimmten Drehzahlbereich verlässliche Werte liefern. So findet insbesondere in einem vergleichsweise hohen Drehzahlbereich typischerweise das sog. EMK-Verfahren Verwendung. Dieses Verfahren versagt aber im unteren Drehzahlbereich nahe Null, weil mangels Rotordrehzahl die zur Verfahrensdurchführungen notwendigen Eingangsparameter fehlen. Dies kann in umständlicher Weise dadurch ausgeglichen werden, dass Testsignale eingesetzt werden oder dass die Bestimmung der Rotorlage in Abhängigkeit bekannter Betriebspunkte und/oder Motoreigenschaften erfolgt.

Andererseits sind Verfahren zur Rotorlageermittlung im unteren Drehzahlbereich bekannt, die ihrerseits aber in höheren Drehzahlbereichen nicht einwandfreie Ergebnisse liefern. Der Übergangsdrehzahlbereich ist gleichermaßen problematisch, weil hierfür weder die hochdrehzahlgeeigneten noch die niedrigdrehzahlgeeigneten Verfahren zwingend verlässliche Ergebnisse liefern. In der Praxis wird deshalb der Übergangsbereich häufig zügig durchfahren, um so in einen Drehzahlbereich zu kommen, der wieder verlässliche Ergebnisse liefern kann.

Der Grund für diese Problematik liegt darin, dass die aus dem Stand der Technik an sich bekannten Berechnungsverfahren Raumzeigergrößen enthalten, die in dieser Form nicht lösbar sind. Es werden deshalb je nach anvisiertem Drehzahlbereich Terme der Berechnungsgleichungen vernachlässigt, so dass lösbare Gleichungen verbleiben. Diese lösbaren Gleichungen können aber nur für den ausgesuchten Drehzahlbereich zuverlässige Ergebnisse liefern, weil sie zur Vereinfachung um Terme eingekürzt sind.

Es ist deshalb die **Aufgabe** der Erfindung, ein Verfahren zur Ermittlung der Rotorlage einer mit einem Frequenzumrichter betriebenen Drehfeldmaschine anzugeben, das über den gesamten Drehzahlbereich zuverlässige Ergebnisse liefert.

Zur **Lösung** dieser Aufgabe wird mit der Erfindung vorgeschlagen ein Verfahren zur Ermittlung der Rotorlage eines mit einem Frequenzumrichter betriebenen Drehstromantriebs, das sich auszeichnet durch die Merkmale von Anspruch 1.

Mit der Verfahrensdurchführung nach Anspruch 1 ist unter anderem vorgesehen, dass die Raumzeigerkomponenten in ein lineares System mit komplexwertigen Ein- und Ausgangsgrößen überführt werden. Damit macht sich die erfindungsgemäße Verfahrensdurchführung zunutze, dass durch die Überführung in ein lineares System mit komplexwertigen Ein- und Ausgangsgrößen eine Gleichung entsteht, die als solche lösbar ist, und zwar ohne Vernachlässigung einzelner Gleichungsterme. Im Ergebnis steht in vorteilhafter Weise, dass zu sämtlichen Gleichungstermen anhand der zuvor bereitgestellten Eingangsgrößen Ausgangsgrößen ermittelt werden können. Die für die im Moment der Erfassung der Eingangsgrößen gegebene Drehzahl sinnigen Termergebnisse werden im Weiteren verwendet, wohingegen die Ergebnisse der übrigen Terme verworfen oder vernachlässigt werden.

Es ist also vermieden, vor einer Bestimmung von wünschenswerter Weise zu erhaltenden Ausgangsgrößen einzelne Gleichungsterme zwecks Erzeugung einer lösbaren Gleichung zu vernachlässigen. Es ist vielmehr vorgesehen, eine Gleichung zu erzeugen, die bezüglich aller Terme lösbar ist, so dass erst hinsichtlich infolge einer Berechnung erhaltene Ergebnisse eine Verwerfung oder Vernachlässigung stattfindet. Es ist so ein geschlossenes System geschaffen, das es ermöglicht, über den gesamten Drehzahlbereich eine zuverlässige Ermittlung der Rotorlage zu ermöglichen, wobei je nach Drehzahlbereich Teilergebnisse, die sinnlos sind, gestrichen werden.

Im Ergebnis der Verfahrensdurchführung steht, dass es zur Rotorlageermittlung weder Testsignale bedarf, noch irgendwelche Betriebspunkte oder Eigenschaften des Motors mit zu berücksichtigen sind. Es ist allein ausreichend, Strom- und Spannungswerte vorzugeben. Im Ergebnis steht dann eine motorparameterfreie Ermittlung der Rotorlage im Sinne einer matrizenfreien Analyse, wobei in vorteilhafter Weise auch Motorparameter, wie z. B. Induktivitäten oder Ständerwiderstände, und die Drehzahl bestimmt werden können.

Ausgangspunkt für die Verfahrensdurchführung ist die allgemeine Spannungsgleichung eines Drehstromantriebs in Raumzeigerdarstellung, die sich wie folgt darstellt.

$$\underline{u}_s^s = R_s \cdot \underline{i}_s^s + L_s \cdot \frac{d\underline{i}_s^s}{dt} + \omega \cdot \underline{\psi}_s^s$$

Unter Berücksichtigung einer Anisotropie ergibt sich hieraus

$$\underline{u}_s^s = R_s \cdot \underline{i}_s^s + \begin{bmatrix} L_{\alpha\alpha} & L_{\alpha\beta} \\ L_{\beta\alpha} & L_{\beta\beta} \end{bmatrix} \cdot \frac{d\underline{i}_s^s}{dt} + \begin{bmatrix} 0 & -1 \\ 1 & 0 \end{bmatrix} \cdot \omega \cdot \underline{\psi}_s^s - \begin{bmatrix} L_{\alpha\alpha} & L_{\alpha\beta} \\ L_{\beta\alpha} & L_{\beta\beta} \end{bmatrix} \cdot \begin{bmatrix} 0 & -1 \\ 1 & 0 \end{bmatrix} \cdot \omega \cdot \frac{d\underline{i}_s^s}{dt}$$

mit

$$L_{\alpha\alpha} = L_{dd} \cdot \cos^2 \varphi + L_{qq} \cdot \sin^2 \varphi - 2 \cdot L_{dq} \cdot \sin\varphi \cdot \cos\varphi$$

$$L_{\beta\beta} = L_{dd} \cdot \sin^2 \varphi + L_{qq} \cdot \cos^2 \varphi + 2 \cdot L_{dq} \cdot \sin\varphi \cdot \cos\varphi$$

$$L_{\alpha\beta} = \left(L_{dd} - L_{qq}\right) \cdot \sin\varphi \cdot \cos\varphi + L_{dq} \cdot \left(\cos^2 \varphi - \sin^2 \varphi\right) = L_{\beta\alpha}$$

Für die beiden Raumzeigerkomponenten ergibt sich damit

$$u_\alpha^s = R_s \cdot i_\alpha^s + L_{\alpha\alpha} \cdot \frac{di_\alpha^s}{dt} + L_{\alpha\beta} \cdot \frac{di_\beta^s}{dt} - \omega \cdot \psi_\beta^s - L_{\alpha\beta} \cdot \omega \cdot i_\alpha^s + L_{\alpha\alpha} \cdot \omega \cdot i_\beta^s$$

$$u_\beta^s = R_s \cdot i_\beta^s + L_{\beta\beta} \cdot \frac{di_\beta^s}{dt} + L_{\beta\alpha} \cdot \frac{di_\alpha^s}{dt} + \omega \cdot \psi_\alpha^s + L_{\beta\alpha} \cdot \omega \cdot i_\beta^s - L_{\beta\beta} \cdot \omega \cdot i_\alpha^s$$

wobei

$$L_{\alpha\alpha} = L_0 + L_1 \cdot \cos 2\varphi - L_{dq} \cdot \sin 2\varphi$$

$$L_{\beta\beta} = L_0 - L_1 \cdot \cos 2\varphi + L_{dq} \cdot \sin 2\varphi$$

$$L_{\alpha\beta} = L_1 \cdot \sin 2\varphi + L_{dq} \cdot \cos 2\varphi = L_{\beta\alpha}$$

mit

$$L_0 = \frac{L_{dd} + L_{qq}}{2}$$

und

$$L_1 = \frac{L_{dd} - L_{qq}}{2}$$

so dass sich ergibt

$$u_\alpha^s = R_s \cdot i_\alpha^s + L_0 \cdot \frac{di_\alpha^s}{dt} + L_1 \cdot \left( \frac{di_\alpha^s}{dt} \cdot \cos 2\varphi + \frac{di_\beta^s}{dt} \cdot \sin 2\varphi \right) + L_{dq} \cdot \left( \frac{di_\beta^s}{dt} \cdot \cos 2\varphi - \frac{di_\alpha^s}{dt} \cdot \sin 2\varphi \right)$$
$$- \omega \cdot \psi_\beta^s - \omega \cdot L_{dq} \cdot \left( i_\alpha^s \cdot \cos 2\varphi + i_\beta^s \cdot \sin 2\varphi \right) + \omega \cdot L_1 \cdot \left( i_\beta^s \cdot \cos 2\varphi - i_\alpha^s \cdot \sin 2\varphi \right)$$
$$+ \omega \cdot L_0 \cdot i_\beta^s$$

$$u_\beta^s = R_s \cdot i_\beta^s + L_0 \cdot \frac{di_\beta^s}{dt} - L_1 \cdot \left( \frac{di_\beta^s}{dt} \cdot \cos 2\varphi - \frac{di_\alpha^s}{dt} \cdot \sin 2\varphi \right) + L_{dq} \cdot \left( \frac{di_\alpha^s}{dt} \cdot \cos 2\varphi + \frac{di_\beta^s}{dt} \cdot \sin 2\varphi \right)$$
$$+ \omega \cdot \psi_\alpha^s + \omega \cdot L_{dq} \cdot \left( i_\beta^s \cdot \cos 2\varphi - i_\alpha^s \cdot \sin 2\varphi \right) + \omega \cdot L_1 \cdot \left( i_\alpha^s \cdot \cos 2\varphi + i_\beta^s \cdot \sin 2\varphi \right)$$
$$- \omega \cdot L_0 \cdot i_\alpha^s$$

Die so ermittelten Raumzeigerkomponenten werden nun in ein lineares System mit komplexwertigen Ein- und Ausgangsgrößen überführt. Dies erbringt den Vorteil eines Systems mit Koeffizienten, die durch komplexe Zahlen beschrieben sind, was eine geschlossene Lösung mittels einer linearen Regressionsanalyse ermöglicht.

Als Eingangsgrößen für das Verfahren dienen in das statorfeste Koordinatensystem transformierte Motorsollwertspannungen und ebenfalls in das statorfeste Koordinatensystem transformierte Motorströme. Dabei werden die Motorsollwertspannungen auf Basis der aktuell am Frequenzumrichter anliegenden Zwischenkreisspannung sowie den PWM-Signalen bestimmt. Die Motorströme stehen vorzugsweise als überabgetastete Signale zur Verfügung. Dabei können abhängig von der eingesetzten Hardware Abtastraten von bis 1MHz vorgesehen sein. Allgemein liegt indes eine Überabtastung vor, wenn der Strom häufiger als zweimal pro Schaltperiode abgetastet wird. Bei einer Schaltfrequenz von 8kHz entspricht das 125 Messwerten pro Schaltperiode. Die Messdaten werden verzögerungsfrei verarbeitet, so dass die aus den Berechnungen ermittelte Rotorlage für eine hochdynamische Regelung des Drehstrommotors genutzt werden kann. Zu diesem Zweck ist es bevorzugt, die Berechnungen auf einen FPGA auszulagern.

Die folgende Kategorisierung lässt sich für das erfindungsmäßige Verfahren angeben.

- Beliebige Testsignale

- Überabtastende Strommessung mit doppelter Schaltfrequenz bis 100 MHz, vorzugsweise mit 32 kHz bis 20 MHz, noch mehr bevorzugt mit 200 kHz bis 4 MHz, am meisten bevorzugt mit beispielsweise 1MHz. Es sind auch andere Abtastraten möglich. Es ist lediglich erforderlich, dass der Motor über die PWM-Signale angeregt wird und dass diese Anregung durch die Strommessung erfasst wird.

- Bestimmung der Rotorlage in Statorkoordinaten

In Folge der nach dem Verfahren vorgesehenen Überführung der Raumzeigerkomponenten in ein lineares System mit komplexwertigen Ein- und Ausgangsgrößen ergeben sich drei rotorlageabhängige Gleichungsterme. Ein erster Gleichungsterm enthält die von der Anisotropie und der zeitlichen Ableitung des Motorstroms vorhandene Abhängigkeit. Die zeitliche Ableitung des Stromes wird nicht direkt gemessen, sondern kann durch Strommessungen zu verschieden Zeitpunkten berechnet werden. Ein zweiter Gleichungsterm ist von der Anisotropie, dem Augenblickswert des Motorstromes sowie der Drehzahl abhängig. Ein dritter Gleichungsterm beschreibt die EMK-Abhängigkeit.

Da die letzten beiden Terme die Motordrehzahl enthalten, sind diese bei Drehzahl Null nicht auswertbar. Eine Information über die Rotorlage lässt sich somit bei Drehzahl Null nur durch den ersten Term gewinnen. Dies ist der Grund dafür, warum bei geberlosen Verfahren nach dem Stand der Technik ein hybrider Ansatz verfolgt wird, indem im unteren Drehzahlbereich die Rotorlage durch die Auswertung von gemessenen Stromsteigungen ermittelt wird, wohingegen im oberen Drehzahlbereich die vorhandene Gegenspannung als Sensorinformation genutzt wird. Bei geberlosen Verfahren für Synchronreluktanzmaschinen fällt diese Information aufgrund der fehlenden Gegenspannung weg und die entsprechenden Verfahren können sich nur auf die ersten beiden Terme stützen. Zudem stellt das betriebspunktabhängige Umschalten zwischen den Verfahren eines hybriden Ansatzes nach dem Stand der Technik eine besondere Herausforderung dar.

Das erfindungsmäßige Verfahren hat nun den Vorteil, dass alle drei rotorlageabhängigen

Terme bei der rekursiven Regressionsberechnung ermittelt werden können, ohne auf verschiedene Berechnungsvorschriften wechseln zu müssen. Die resultierende Rotorlage kann beispielsweise durch betriebspunktabhängige Wichtungen der drei Terme ermittelt werden.

Ein weiterer Vorteil des erfindungsmäßigen Verfahrens besteht darin, dass zusätzlich zur Rotorlage auch Motorparameter und die Drehzahl ermittelt werden können.

Beispielsweise ergibt sich bei einer Regressionsanalyse für den ersten rotorlageabhängigen Term als Ergebnis der Ausdruck

$$\left( L_1 + j \cdot L_{dq} \right) \cdot e^{j2\varphi}$$

Unter der Annahme, dass keine Kreuzverkopplung ($L_{dq}$ =0) vorhanden ist, ergibt sich die Rotorlage durch Auswertung des Real- und Imaginäranteils des Ergebnisses mittels einer Arkustangensberechnung. Der Motorparameter $L_1$ kann aus dem Betrag des komplexen Ergebnisses berechnet werden.

Als weiterer Verfahrensschritt ist vorgesehen, dass unter Verwendung der Eingangsgrößen die Rotorgröße als Ausgangsgröße mittels einer linearen Regressionsanalyse bestimmt wird. Der rekursive Regressionsalgorithmus (RLS-Verfahren) stellt sich basierend auf dem Prinzip der "Minimierung der Summe der Fehlerquadrate" (LS-Verfahren) wie folgt dar.

Es ist der Ausgangpunkt bei einem LS-Verfahren, Koeffizienten eines Systems, welches durch ein lineares Gleichungssystem beschrieben wird, zu schätzen. Dazu werden zunächst Paare von Eingangs- und Ausgangsgrößen gespeichert. Anschließend werden diese Daten miteinander verrechnet. Im Ergebnis stehen Koeffizienten, die den quadratischen Fehler zwischen den Ausgangsgrößen, der gespeicherten Werte und den über die Koeffizienten und den Eingangsgrößen berechneten Ausgangsgrößen minimieren.

Sollen beispielsweise n Parameter ($x_1...x_n$) eines Systems bestimmt werden, sind dazu m Paare von Eingangsgrößen ($a_{11}...a_{1n}$, $a_{21}...a_{2n}$, ..., $a_{m1}...a_{mn}$) und Ausgangsgrößen ($y_1...y_m$) zu betrachten. Bei einem linearen Zusammenhang zwischen Ein- und Ausgangsgrößen ergibt sich folgende Modellgleichung.

$$y_i = \sum_{j=1}^{n} a_{ij} \cdot x_j$$

mit
$i = 1,...,m$

In Matrixform ergibt sich

$$\underline{y} = \underline{\underline{A}} \cdot \underline{x}$$

wobei

$$\underline{y} = \begin{bmatrix} y_1 \\ \vdots \\ y_m \end{bmatrix}$$

$$\underline{A} = \begin{bmatrix} a_{11} & \cdots & a_{1n} \\ \vdots & & \vdots \\ a_{m1} & \cdots & a_{mn} \end{bmatrix}$$

$$\underline{x} = \begin{bmatrix} x_1 \\ \vdots \\ x_n \end{bmatrix}$$

Diese Gleichung beschreibt ein System mit n Koeffizienten, welches mit m linearen Gleichungen beschrieben wird. Dieses System kann gelöst werden, wenn der Vektor $\underline{y}$ als Linearkombination der Spaltenvektoren der Matrix $\underline{A}$ beschrieben werden kann. Die Lösung erhält man durch Invertierung der Matrix $\underline{A}$.

$$\underline{x} = \underline{A}^{-1} \cdot \underline{y}$$

Diese Gleichung kann allerdings in dieser Form für das Verfahren nicht benutzt werden, da für die Berechnung zunächst alle Paare der Ein- und Ausgangsgrößen bekannt sein müssen. Der Aufwand für Speicherung der Daten und Invertierung der Matrix A würde auch mit den heute am Markt verfügbaren leistungsfähigsten FPGA-Bausteinen nicht zu bewerkstelligen sein. Aus diesem Grund wird zur Lösung des Gleichungssystems ein rekursives Verfahren vorgeschlagen.

Das RLS-Verfahren ermöglicht bereits Berechnungen durchzuführen, sobald ein neues Paar von Ein- und Ausgangsgrößen verfügbar ist. Alte Paare von Ein- und Ausgangsgrößen werden im aktuellen Berechnungsschritt nicht mehr benötigt.

Die Berechnungsvorschriften eines RLS-Verfahrens sind wie folgt

$$\underline{g}(k) = \underline{P}(k-1) \cdot \underline{A}(k)^T \cdot \left[1 + \underline{A}(k) \cdot \underline{P}(k-1) \cdot \underline{A}(k)^T \right]^{-1}$$

$$\underline{x}(k) = \underline{x}(k-1) + \underline{g}(k) \cdot \left[\underline{y}(k) - \underline{A}(k) \cdot \underline{x}(k-1)\right]$$

$$\underline{P}(k) = \underline{P}(k-1) - \underline{g}(k) \cdot \underline{A}(k) \cdot \underline{P}(k-1)$$

Bei der Umsetzung ist zu beachten, dass die Korrelationsmatrix $\underline{P}$ vor dem Starten der Rekursion initialisiert werden muss. Es ist deshalb in bevorzugter Weise vorgesehen, die Diagonalelemente der Matrix mit einer positiven Konstante vorzuladen.

Im ersten Schritt der Rekursion wird der Vektor der sogenannten Kalmanverstärkung berechnet. Für diese Berechnung werden die Korrelationsmatrix und die aktuellen Eingangsgrößen benötigt.

Im zweiten Schritt wird ein neuer Koeffizientenvektor berechnet. Dazu wird die Differenz aus Ausgangsgrößen und Modellausgangsgrößen mit dem aktuellen Vektor der Kalmanverstärkung multipliziert und das Ergebnis zum alten Koeffizientenvektor addiert.

Im letzten Schritt der ersten Rekursionsschleife wird eine neue Korrelationsmatrix berechnet.

Nach Abschluss dieser drei Schritte wird der Algorithmus im nächsten Abtastzeitpunkt, wenn also neue Ein- und Ausgangswerte verfügbar sind, von vorne durchlaufen.

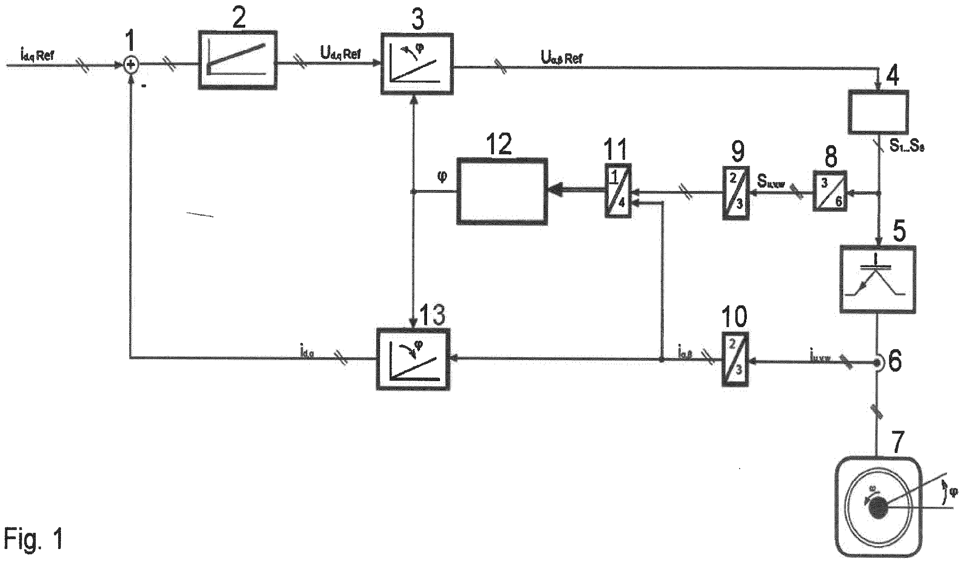

Weitere Merkmale und Vorteile ergeben sich aus der nachfolgenden Beschreibung anhand der einzigen Figur 1, die in rein schematischer Darstellung eine Stromregelung zeigt.

Figur 1 zeigt schematisch in einem Schaltdiagramm eine geberlose, feldorientierte Stromregelung. Der überlagerte Drehzahlregelkreis und der gegebenenfalls vorhandene Lageregelkreis sind hier der besseren Übersicht wegen nicht dargestellt.

Die für eine feldorientierte Regelung benötigten Stromistwerte werden auf der Leistungsebene mit Hilfe von Stromsensoren 6 an einer Drehfeldmaschine 7 messtechnisch erfasst. Diese Ströme werden auf der Signalebene mit einem dritten Koordinatenwandler 10 gewandelt, sodass Stromistwert-Raumzeiger im Ständerkoordinatensystem zur Verfügung stehen. Ein dem dritten Koordinatenwandler 10 nachgeschalteter Koordinatendreher dient als zweiter Vektordreher 13 in das feldorientierte Koordinatensystem. Die so erhaltenen Stromistwert-Raumzeiger in Feldkoordinaten werden mit den von einem überlagerten Drehzahlregler zur Verfügung gestellten Stromsollwert-Raumzeigern in einen Addierer 1 geführt. Der Stromistwert-Raumzeiger wird dazu zunächst invertiert. Die so erhaltene Differenz zwischen Stromsollwert-Raumzeiger und Stromistwert-Raumzeiger wird einer Regeleinrichtung 2 zugeführt. Am Ausgang dieser Regeleinrichtung 2 liegt ein Spannungssollwert-Raumzeiger in Feldkoordinaten vor, der mit dem ersten Vektordreher 3 in das Ständerkoordinatensystem gedreht wird. Ein Pulsweitenmodulator 4 berechnet aus diesem Spannungssollwert-Raumzeiger schließlich die Ansteuersignale für die Leistungshalbleiter im Stellglied 5.

Die vom Pulsweitenmodulator 4 zur Verfügung gestellten sechs Ansteuersignale werden mit Hilfe des ersten Koordinatenwandlers 8 und der Berücksichtigung der aktuellen Zwischenkreisspannung des Frequenzumrichters in ein dreiphasiges Spannungssystem transformiert. Diesem ersten Koordinatenwandler 8 ist ein zweiter Koordinatenwandler 9 nachgeschaltet, der die Transformation dieses Dreiphasenspannungssystems in die Raumzeigerdarstellung in Ständerkoordinaten überführt.

In einer ersten Recheneinheit 11 werden die Spannungssollwert-Raumzeiger aus dem zweiten Koordinatenwandler 9 und die Stromistwert-Raumzeiger aus dem dritten Koordinatenwandler 10 alsdann in ein lineares System mit komplexwertigen Ein- und Ausgangsgrößen überführt.

In einer zweiten Recheneinheit 12 wird sodann die Rotorlage mittels einer linearen Regressionsanalyse bestimmt. Diese Rotorlage wird bei der feldorientierten Regelung benötigt, um die Vektordrehung von Feldkoordinaten in Ständerkoordinaten im ersten Vektordreher 3 durchzuführen. Ebenso wird diese Rotorlage benötigt, um die Vektordrehung von Ständerkoordinaten in Feldkoordinaten im zweiten Vektordreher 13 durchzuführen.

**Bezugszeichen**

1 Addierer
2 Regeleinrichtung
3 erster Vektordreher
4 Pulsweitenmodulator
5 Stellglied
6 Stromsensor
7 Drehfeldmaschine
8 erster Koordinatenwandler
9 zweiter Koordinatenwandler
10 dritter Koordinatenwandler
11 erste Recheneinheit
12 zweite Recheneinheit
13 zweiter Vektordreher

**Patentansprüche**

1. Verfahren zur Ermittlung der Rotorlage eines mit einem Frequenzumrichter betriebenen Drehstromantriebs mit folgenden Schritten:

   a) Bereitstellen von Motorströmen in Statorkoordinaten ($i_\alpha$, $i_\beta$) als erste Eingangsgröße einer ersten Recheneinheit (11),
   b) Ermitteln von Motorsollwertspannungen in Statorkoordinaten aus einer aktuellen Zwischenkreisspannung des Frequenzumrichters und PWM-Signalen ($S_1$ - $S_6$) sowie Bereitstellen der Motorsollwertspannungen in Statorkoordinaten als zweite Eingangsgröße der ersten Recheneinheit (11),
c) Berechnung der Rotorlage ($\varphi$) in Statorkoordinaten, wobei

- ausgehend von der allgemeinen Spannungsgleichung

$$\underline{u}_s^s = R_s \cdot \underline{i}_s^s + L_s \cdot \frac{d\underline{i}_s^s}{dt} + \omega \cdot \underline{\psi}_s^s$$

der Drehfeldmaschine in Raumzeigerdarstellung eine Aufteilung in die beiden Spannungs-Raumzeiger-komponenten

$$u_\alpha^s = R_s \cdot i_\alpha^s + L_0 \cdot \frac{di_\alpha^s}{dt} + L_1 \cdot \left( \frac{di_\alpha^s}{dt} \cdot \cos 2\varphi + \frac{di_\beta^s}{dt} \cdot \sin 2\varphi \right) + L_{dq} \cdot \left( \frac{di_\beta^s}{dt} \cdot \cos 2\varphi - \frac{di_\alpha^s}{dt} \cdot \sin 2\varphi \right)$$
$$- \omega \cdot \psi_\beta^s - \omega \cdot L_{dq} \cdot \left( i_\alpha^s \cdot \cos 2\varphi + i_\beta^s \cdot \sin 2\varphi \right) + \omega \cdot L_1 \cdot \left( i_\beta^s \cdot \cos 2\varphi - i_\alpha^s \cdot \sin 2\varphi \right)$$
$$+ \omega \cdot L_0 \cdot i_\beta^s$$

$$u_\beta^s = R_s \cdot i_\beta^s + L_0 \cdot \frac{di_\beta^s}{dt} - L_1 \cdot \left( \frac{di_\beta^s}{dt} \cdot \cos 2\varphi - \frac{di_\alpha^s}{dt} \cdot \sin 2\varphi \right) + L_{dq} \cdot \left( \frac{di_\alpha^s}{dt} \cdot \cos 2\varphi + \frac{di_\beta^s}{dt} \cdot \sin 2\varphi \right)$$
$$+ \omega \cdot \psi_\alpha^s + \omega \cdot L_{dq} \cdot \left( i_\beta^s \cdot \cos 2\varphi - i_\alpha^s \cdot \sin 2\varphi \right) + \omega \cdot L_1 \cdot \left( i_\alpha^s \cdot \cos 2\varphi + i_\beta^s \cdot \sin 2\varphi \right)$$
$$- \omega \cdot L_0 \cdot i_\alpha^s$$

vorgenommen wird,
- die Spannungssollwert-Raumzeiger $(u_\alpha^s, \quad u_\beta^s)$ und die Stromistwert-Raumzeiger ($i_\alpha$, $i_\beta$) in ein lineares System mit komplexwertigen Ein- und Ausgangsgrößen überführt werden,
**dadurch gekennzeichnet, dass**
- unter Verwendung der Eingangsgrößen der ersten Rechnereinheit (11) die Rotorlage ($\varphi$) als Ausgansgröße dieses Systems mittels einer linearen Regressionsanalyse bestimmt wird.

2. Verfahren nach Anspruch 1, **dadurch gekennzeichnet, dass** das lineare System mehrere rotorlagenabhängige Terme aufweist, wobei die resultierende Rotorlage durch betriebspunktabhängige Wichtung der Terme ermittelt wird.

3. Verfahren nach Anspruch 1 oder 2, **dadurch gekennzeichnet, dass** das lineare System mehrere rotorlagenabhängige Terme aufweist, wobei die resultierende Rotorlage über eine Mittelung aller Terme ermittelt wird.

4. Verfahren nach Anspruch 1, 2 oder 3, **dadurch gekennzeichnet, dass** das lineare System mehrere rotorlagenabhängige Terme aufweist, wobei die resultierende Rotorlage durch Auswahl eines Terms infolge des Ausschlusses aller anderen Terme auf Basis einer Plausibilitätsprüfung ermittelt wird.

5. Verfahren nach einem der vorhergehenden Ansprüche, **dadurch gekennzeichnet, dass** die Bereitstellung von Motorströme mittels einer überabtastenden Strommessung erfolgt.

6. Verfahren nach Anspruch 5, **dadurch gekennzeichnet, dass** die Strommessung mit einer Abtastrate von bis zu 1MHz erfolgt.

**Claims**

1. A method for determining the rotor position of a three-phase drive, operated with a frequency converter, comprising the following steps:

   a) providing motor currents in stator coordinates ($i_\alpha$, $i_\beta$) as a first input value to a first computing unit (11),
   b) determining motor set point voltages in stator coordinates from a current intermediate circuit voltage of the frequency converter and PWM signals ($S_1$ - $S_6$) as well as providing the motor set point voltages in stator coordinates as a second input value of the first computing unit (11),
   c) calculating the rotor position ($\varphi$) in stator coordinates, wherein

   - based on the general voltage equation

$$\underline{u}_s^s = R_s \cdot \underline{i}_s^s + L_s \cdot \frac{d\underline{i}_s^s}{dt} + \omega \cdot \underline{\psi}_s^s$$

   of the induction machine in space vector representation, a division into the two voltage-space vector components

$$u_\alpha^s = R_s \cdot i_\alpha^s + L_0 \cdot \frac{di_\alpha^s}{dt} + L_1 \cdot \left( \frac{di_\alpha^s}{dt} \cdot \cos 2\varphi + \frac{di_\beta^s}{dt} \cdot \sin 2\varphi \right) + L_{dq} \cdot \left( \frac{di_\beta^s}{dt} \cdot \cos 2\varphi - \frac{di_\alpha^s}{dt} \cdot \sin 2\varphi \right)$$
$$- \omega \cdot \psi_\beta^s - \omega \cdot L_{dq} \cdot \left( i_\alpha^s \cdot \cos 2\varphi + i_\beta^s \cdot \sin 2\varphi \right) + \omega \cdot L_1 \cdot \left( i_\beta^s \cdot \cos 2\varphi - i_\alpha^s \cdot \sin 2\varphi \right)$$
$$+ \omega \cdot L_0 \cdot i_\beta^s$$

$$u_\beta^s = R_s \cdot i_\beta^s + L_0 \cdot \frac{di_\beta^s}{dt} - L_1 \cdot \left( \frac{di_\beta^s}{dt} \cdot \cos 2\varphi - \frac{di_\alpha^s}{dt} \cdot \sin 2\varphi \right) + L_{dq} \cdot \left( \frac{di_\alpha^s}{dt} \cdot \cos 2\varphi + \frac{di_\beta^s}{dt} \cdot \sin 2\varphi \right)$$
$$+ \omega \cdot \psi_\alpha^s + \omega \cdot L_{dq} \cdot \left( i_\beta^s \cdot \cos 2\varphi - i_\alpha^s \cdot \sin 2\varphi \right) + \omega \cdot L_1 \cdot \left( i_\alpha^s \cdot \cos 2\varphi + i_\beta^s \cdot \sin 2\varphi \right)$$
$$- \omega \cdot L_0 \cdot i_\alpha^s$$

   is carried out,
   - the voltage set point space vector $(u_\alpha^s, u_\beta^s)$ and the current actual value space vector ($i_\alpha$, $i_\beta$) are converted into a linear system with complex-valued input and output values,
   **characterized in that**
   - using the input values of the first computing unit (11), the rotor position ($\varphi$) is determined as the output value of this system by means of a linear regression analysis.

2. A method according to claim 1, **characterized in that** the linear system comprises several rotor position-dependent terms, wherein the resulting rotor position is being determined by weighting the terms as a function of the operating point.

3. A method according to claim 1 or 2, **characterized in that** the linear system comprises several rotor position-dependent terms, wherein the resulting rotor position is being determined by averaging all the terms.

4. A method according to claim 1, 2 or 3, **characterized in that** the linear system comprises several rotor position-dependent terms, wherein the resulting rotor position is being determined by selecting a term as a result of the exclusion of all other terms on the basis of a plausibility check.

5. A method according to one of the preceding claims, **characterized in that** the provision of motor currents takes place by means of an overscanning current measurement.

6. A method according to claim 5, **characterized in that** the current measurement takes place at a scanning rate of up to 1MHz.

**Revendications**

1. Procédé de détermination de la position du rotor d'un moteur triphasé fonctionnant par moyen d'un convertisseur de fréquence, comprenant les étapes suivantes de :

   a) fournir des courants de moteur dans des coordonnés de stator ($i_\alpha$, $i_\beta$) en tant que première valeur d'entrée d'une première unité de calcul(11),
   b) déterminer des tensions de consigne de moteur dans des coordonnés de stator à partir d'une tension actuelle de circuit intermédiaire du convertisseur de fréquence et à partir de signaux PWM (S1 - S6) ainsi que fournir les tensions de consigne de moteur dans des coordonnés de stator en tant que deuxième valeur d'entrée de la première unité de calcul (11),
   c) calculer la position du rotor ($\varphi$) dans des coordonnés de stator, dans lequel

   - à partir de l'équation de tension générale

$$\underline{u}_s^s = R_s \cdot \underline{i}_s^s + L_s \cdot \frac{d\underline{i}_s^s}{dt} + \omega \cdot \underline{\psi}_s^s$$

   de la machine à induction dans une représentation de vecteur spatial, une division en les deux composants de vecteur spatial de tension

$$u_\alpha^s = R_s \cdot i_\alpha^s + L_0 \cdot \frac{di_\alpha^s}{dt} + L_1 \cdot \left( \frac{di_\alpha^s}{dt} \cdot \cos 2\varphi + \frac{di_\beta^s}{dt} \cdot \sin 2\varphi \right) + L_{dq} \cdot \left( \frac{di_\beta^s}{dt} \cdot \cos 2\varphi - \frac{di_\alpha^s}{dt} \cdot \sin 2\varphi \right)$$
$$- \omega \cdot \psi_\beta^s - \omega \cdot L_{dq} \cdot \left( i_\alpha^s \cdot \cos 2\varphi + i_\beta^s \cdot \sin 2\varphi \right) + \omega \cdot L_1 \cdot \left( i_\beta^s \cdot \cos 2\varphi - i_\alpha^s \cdot \sin 2\varphi \right)$$
$$+ \omega \cdot L_0 \cdot i_\beta^s$$

$$u_\beta^s = R_s \cdot i_\beta^s + L_0 \cdot \frac{di_\beta^s}{dt} - L_1 \cdot \left( \frac{di_\beta^s}{dt} \cdot \cos 2\varphi - \frac{di_\alpha^s}{dt} \cdot \sin 2\varphi \right) + L_{dq} \cdot \left( \frac{di_\alpha^s}{dt} \cdot \cos 2\varphi + \frac{di_\beta^s}{dt} \cdot \sin 2\varphi \right)$$
$$+ \omega \cdot \psi_\alpha^s + \omega \cdot L_{dq} \cdot \left( i_\beta^s \cdot \cos 2\varphi - i_\alpha^s \cdot \sin 2\varphi \right) + \omega \cdot L_1 \cdot \left( i_\alpha^s \cdot \cos 2\varphi + i_\beta^s \cdot \sin 2\varphi \right)$$
$$- \omega \cdot L_0 \cdot i_\alpha^s$$

   est effectuée,

   - les vecteurs spatiaux de tension de consigne $(u_\alpha^s,\ u_\beta^s)$ et les vecteurs spatiaux de valeurs effectives de courant $(u_\alpha^s,\ u_\beta^s)$ sont convertis en un système linéaire comprenant des valeurs d'entrée et de sortie à valeur complexe, **caractérisé en ce qu'**

- en utilisant les valeurs d'entrée de la première unité de calcul (11) on détermine la position du rotor (φ) en tant que valeur de sortie de ce système par moyen d'une analyse de régression linéaire.

2. Procédé selon la revendication 1, **caractérisé en ce que** le système linéaire comprend plusieurs termes dépendants de la position du rotor, dans lequel la position du rotor résultante est déterminée en pondérant les termes en fonction du point de fonctionnement.

3. Procédé selon la revendication 1 ou la revendication 2, **caractérisé en ce que** le système linéaire comprend plusieurs termes dépendants de la position du rotor, dans lequel on détermine la position résultante du rotor en formant la moyenne de tous les termes.

4. Procédé selon la revendication 1, la revendication 2 ou la revendication 3, **caractérisé en ce que** le système linéaire comprend plusieurs termes dépendants de la position du rotor, dans lequel on détermine la position résultante du rotor en sélectionnant un terme en raison de l'exclusion de tous les autres termes sur la base d'un contrôle de plausibilité.

5. Procédé selon l'une des revendications précédentes, **caractérisé en ce que** les courants de moteur sont fournis par moyen d'une mesure de courant à suréchantillonnage.

6. Procédé selon la revendication 5, **caractérisé en ce que** la mesure de courant se fait avec une fréquence de balayage de jusqu'à 1 MHz.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006004034 A1
- DE 10226974 A1
- DE 102016220891 A1
- DE 102014102376 A1